# DEMANDE DE BREVET EUROPEEN

(11) **EP 1 502 994 A1**
(43) Date de publication de la demande: **02.02.2005**
(21) Numéro de dépôt: 04300498.5
(22) Date de dépôt: 30.07.2004
(51) Int. Cl.: E01C 1/00, C04B 26/26, C08L 95/00

(54) **Béton bitumineux comprenant des granulats alvéolaires**

(30) Priorité: 01.08.2003 FR 0309521
(71) Demandeur: COLAS, 92100 Boulogne-Billancourt (FR)
(72) Inventeur: Aubert, Jean-Luc, 92350 Le Plessis-Robinson (FR)
(74) Mandataire: Catherine, Alain

(57) **Abrégé**

L'invention concerne un béton bitumineux (1) pour couche de roulement comprenant des granulats classiques (20), éventuellement des fines d'apport (3), éventuellement un ou des additifs, et un liant (4). Selon l'invention, le béton bitumineux (1) comprend en outre des granulats alvéolaires (21) possédant une masse volumique en vrac inférieure à un gramme par centimètre cube. Le béton bitumineux (1) selon l'invention permet de réaliser une couche de roulement qui présente une grande capacité de réduction des nuisances sonores par une diminution importante, durable et reproductible du bruit de contact pneumatique chaussée. Par ailleurs, le béton bitumineux (1) selon l'invention présente une résistance durable aux sollicitations climatiques et peut être mis en oeuvre à froid ou à chaud.

## Description

La présente invention concerne un béton bitumineux comprenant des granulats alvéolaires destiné à être intégré au sein d'une couche de roulement ou d'un revêtement routier.

L'invention est donc dans le domaine technique des travaux publics et plus particulièrement dans le domaine de la construction de chaussées.

La circulation des véhicules sur une chaussée entraîne des nuisances sonores. Ces nuisances, généralement nommées bruit de contact pneumatique chaussée ou BCPC, peuvent être importantes en fonction de l'emplacement des chaussées par rapport aux zones habitées, voirie urbaine ou périurbaine par exemple, en fonction du débit, de la composition et de la vitesse du trafic, voie rapide ou voie lourde par exemple.

Il existe un besoin de réduction des nuisances sonores attribuables à la circulation des véhicules sur la couche de roulement des chaussées.

La capacité d'une couche de roulement à réduire les nuisances sonores apportées par le bruit de contact pneumatique chaussée (BCPC) des véhicules est un paramètre qui dépend entre autres de la nature de la couche de roulement, des conditions de trafic, des conditions météorologiques et qui diminue au cours du temps à la suite de l'évolution de la nature de la couche de roulement sous l'effet du trafic et ou des cycles climatiques.

Des études sur le bruit de contact pneumatique chaussée (BCPC) ont montré que celui-ci dépend pour une grande part, de la texture de la chaussée et de la capacité d'absorption acoustique de la couche de roulement. Sur la chaussée, le BCPC est généré par deux types de processus, le premier vibratoire et le second selon les effets de la résonance de l'air.

Les processus vibratoires concernent principalement les basses fréquences générées par les impacts des pavés de gomme du pneumatique sur les granulats de surface, par la déformation de la zone de contact entre le pneumatique et la chaussée et par la rupture d'adhérence des pavés de gomme. La macrotexture est la forme géométrique de la surface de la couche de roulement depuis une échelle de 0,5 mm à 50 mm horizontalement et pour des dénivellations verticales de 0,2 mm à 10 mm. Plus la macrotexture est élevée dans ces échelles de mesure, plus le mécanisme d'impact est prédominant dans la génération du BCPC. Le BCPC est donc directement lié à la dimension maximale (D) des granulats et à la composition du mélange selon les proportions des divers composants. Plus la dimension maximale (D) est grande, plus le niveau de bruit est important. Les effets de la résonance de l'air dépendent principalement du phénomène de compression détente de l'air dans les alvéoles non communicantes en périphérie du pneumatique. Ce phénomène dominant dans le domaine des hautes fréquences est d'autant plus important que l'aire de contact entre le pneumatique et la chaussée est importante. Son intensité est donc directement liée à la proportion de vides communicants présentée par le revêtement.

Il est donc souhaitable de disposer de matériaux permettant de réaliser une couche de roulement réduisant les nuisances sonores apportées par le bruit de contact pneumatique chaussée (BCPC) et qui soit résistante aux sollicitations climatiques.

Les buts ci-dessus sont atteints selon l'invention par un béton bitumineux pour couche de roulement comprenant des granulats classiques, éventuellement des fines d'apport, éventuellement un ou des additifs et un liant. Selon l'invention, le béton bitumineux comprend en outre des granulats alvéolaires possédant une masse volumique en vrac inférieure à un gramme par centimètre cube. Le béton bitumineux selon l'invention permet de réaliser une couche de roulement qui présente une grande capacité de réduction des nuisances sonores par une diminution importante, durable et reproductible du BCPC. Par ailleurs, le béton bitumineux selon l'invention présente une résistance durable aux sollicitations climatiques et peut être mis en oeuvre à froid ou à chaud.

D'une manière surprenante, les inventeurs ont constaté que le mélange de granulats alvéolaires et classiques ne pose pas de problème lors de la fabrication du béton bitumineux ou de sa mise en oeuvre. En effet, contrairement à ce que l'on aurait pu attendre du mélange de matériaux d'origine et de densités différentes au sein du milieu fluide qu'est le liant bitumineux, il n'y a pas de ségrégation entre les granulats. On n'observe pas de phénomène de sédimentation ou de flottation des granulats au sein du liant. Par conséquent l'utilisation de deux types de granulats, alvéolaires et classiques permet de réaliser un béton bitumineux selon l'invention.

Le béton bitumineux de la présente invention est particulièrement adapté à la réalisation d'une couche de roulement dans les configurations de routes suivantes : les voiries traversant les zones urbaines où la vitesse des véhicules est supérieure à 50 km/h, les voiries à fort trafic traversant les zones urbaines où la vitesse des véhicules est limitée à 50 km/h, les voies périurbaines telles que déviations, rocades, pénétrantes, voies express, les rues encaissées entre immeubles riverains proches, et enfin le béton bitumineux est particulièrement adapté à une utilisation dans le cadre de complexes phoniques jumelés avec des écrans acoustiques.

Dans des modes de réalisation particuliers du béton bitumineux pouvant être pris isolément ou selon toutes leurs combinaisons techniquement possibles et présentant chacun des avantages spécifiques :
- Le béton bitumineux comprend 10% à 25% en masse de granulats alvéolaires.
- Les granulats alvéolaires sont choisis parmi les gammes de tailles 4/6,3 ; 4/10 ; 6,3/10 ; 3/5 ; 3/8 ; 5/8 ; 5/10 et 8/11.
- Les granulats classiques ont une dimension maximale (D) d'au plus 6,3 mm.
- Les granulats alvéolaires sont choisis parmi les pouzzolanes, l'argile expansée, le schiste expansé.
- Le liant est un bitume pur.
- Le liant est un bitume modifié.
- Le liant comprend un mélange de bitumes routiers et d'un élastomère thermoplastique de type polystyrène-polybutadiène-polystyrène séquencé.
- Le béton bitumineux comprend :
   - 45% à 70% de granulats classiques 4/6,3 ;
   - 10 à 25% de granulats alvéolaires ;
   - 15 à 35 % de granulats classiques 0/2 ;
   - 0 à 5% de fines d'apport ;
   - 0 à 5% d'additif ; et
l'ensemble étant lié par un liant, à raison d'environ 6 parties en masse pour cent parties en masse de granulats classiques et alvéolaires et de fines d'apport.

L'invention concerne également une couche de roulement. Selon l'invention, la couche de roulement comprend un béton bitumineux tel que décrit ci-dessus.

La suite de la description se réfère aux figures annexées qui représentent, respectivement :
Figure 1 : une coupe transversale d'une couche de roulement comprenant un béton bitumineux selon l'invention.
Figure 2 : un détail de la coupe transversale représentée sur la figure 1.

Dans la description qui suit ainsi que sur les dessins et afin de leur apporter plus de concision et de clarté, les mêmes chiffres de référence sont utilisés pour désigner des éléments ou constituants identiques du béton bitumineux selon l'invention.

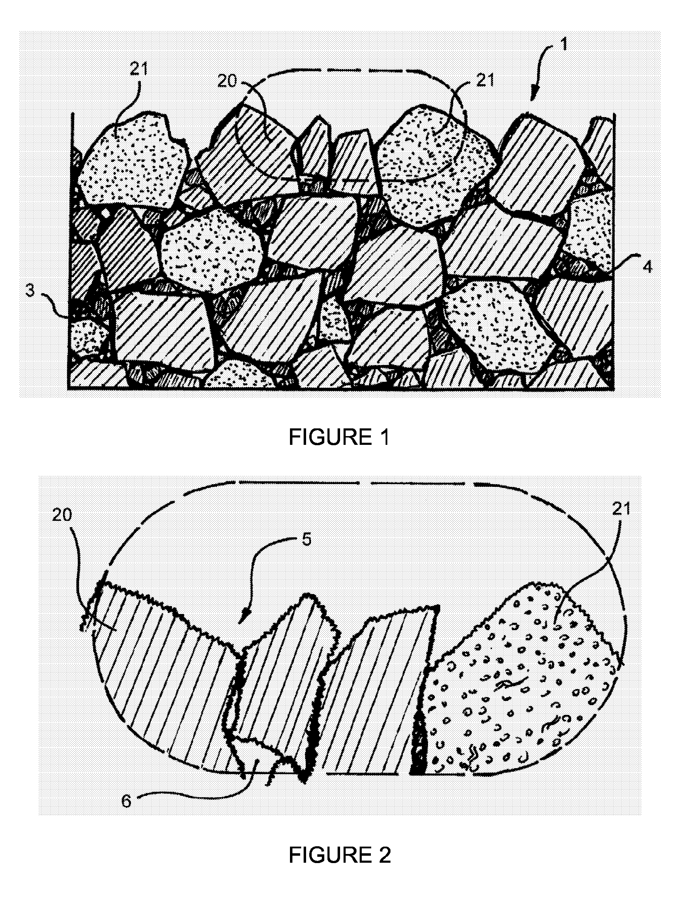

Une couche de roulement comprenant un béton bitumineux 1 selon l'invention est représenté sur les figures 1 et 2.

Le béton bitumineux 1 comprend des granulats classiques 20, des granulats alvéolaires 21, des fines d'apport 3 et un liant 4. Les gammes de taille des granulats alvéolaires 21 sont exprimées par deux chiffres. Par exemple, les granulats alvéolaires utilisés peuvent être de type 4/6,3. Les deux chiffres correspondent aux bornes respectivement inférieure et supérieure, exprimées en millimètre de la gamme de taille des granulats alvéolaires 21. Les granulats alvéolaires sont également définis par leur masse volumique en vrac qui est inférieure à un gramme par centimètre cube.

Les granulats alvéolaires sont des granulats naturels ou artificiels qui se caractérisent par une porosité composée :
- d'une part d'alvéoles ouvertes, formées de canaux reliés entre eux et à la surface du matériau, créant ainsi une porosité ouverte encore appelée vides communicants,
- et d'autre part, d'alvéoles fermées, formées de canaux et vides contenant un volume d'air emprisonné dans des inclusions fermées, créant un volume de vide interne sans contact avec la surface du matériau.

Ces alvéoles fermées ou ouvertes sont constituées de pores de taille microscopique et macroscopique, de section variable et de tortuosité, représentative de la géométrie du réseau de canaux internes, quelconque.

Par le terme « masse volumique en vrac », l'homme du métier comprendra masse volumique du granulat sec en vrac, qui s'assimile à une masse volumique apparente de matériaux foisonnés, pores internes et vides entre grains compris.

La valeur de la masse volumique en vrac exprimée est le rapport de la masse d'un échantillon de granulat au volume du récipient contenant cet échantillon, le granulat étant déversé en vrac et sans compactage dans le récipient et le remplissant entièrement. Cette mesure peut être réalisée selon la norme belge référencée NBN B 11-251 de novembre 1975.

Pour l'homme du métier, le terme granulat classique 20 représente un granulat autre qu'un granulat alvéolaire 21 et répondant aux exigences d'une utilisation routière.

De manière classique pour l'homme du métier, Les fines minérales d'apport 3 sont des poudres minérales fabriquées industriellement répondant aux exigences d'une utilisation routière.

Les gammes de taille, les formes et les proportions des granulats 20 et 21 et des éventuelles fines minérales d'apport 3 déterminent la macrotexture 5 de la couche de roulement 1, représentée sur la partie supérieure de la figure 1. La macrotexture 5 correspond aux espaces les plus importants essentiellement définis entre les granulats 20 et 21 les plus volumineux affleurant en surface. La dimension maximale D des granulats classiques 20 étant de 6,3 mm, et leur proportion importante dans le béton bitumineux, la texture de surface 5 qui résulte de leur utilisation permet de diminuer la génération de la composante vibratoire du BCPC.

Par ailleurs, comme on l'observe sur l'agrandissement de la figure 2, le béton bitumineux 1 comprend des vides communicants 6 dus à la composition du mélange granulaire qui relient la macrotexture 5 de surface à l'intérieur de la couche de roulement et aux vides communicants propres aux granulats alvéolaires. Cela forme un réseau continu de vides communicants qui, associé à la faible rigidité des granulats alvéolaires permet de diminuer considérablement la propagation des phénomènes vibratoires.

De plus, la macrotexture de surface 5 permet de diminuer significativement l'aire de contact entre le pneumatique et la chaussée et, reliée aux vides communicants, de pratiquement éliminer le phénomène de compression-détente de l'air et donc la composante du BCPC résultant de la résonance de l'air.

Le béton bitumineux 1 de l'invention peut être mis en oeuvre à « froid », « tiède » ou « à chaud ». « A chaud » signifie que la température de mise en oeuvre du béton bitumineux 1 est approximativement supérieure à 130°C. Dans le cas de l'utilisation d'un liant 4 modifié au sein du béton bitumineux, « A chaud » signifie approximativement supérieur à 160°C. « Tiède » signifie que la température de mise en oeuvre du béton bitumineux est comprise approximativement entre 80°C et 140°C. Enfin, « à froid » signifie que la température de mise en oeuvre du béton bitumineux est égale à la température ambiante, dans des limites comprises entre 5°C et 40°C environ.

### Exemple 1 : Réalisation d'un béton bitumineux selon l'invention.

Un béton bitumineux 1 est réalisé par mélange de 62% de granulats classiques 4/6,3 12% de granulats alvéolaires 5/10, 24 % de granulats classiques 0/2 et 2% de fines d'apport. L'ensemble est lié par le liant SACERFLEX® à raison de 6 parties pour cent parties du mélange granulats et fines d'apport. SACERFLEX® est un mélange de bitumes routiers et d'un élastomère thermoplastique de type polystyrène-polybutadiène-polystyrène séquencé, en proportion variable et d'additifs chimiques. L'enrobé ainsi réalisé est utilisé pour former une couche de roulement.

### Exemple 2 : Essai de gain acoustique d'un revêtement comprenant le béton bitumineux de l'invention.

Les mesures ont été réalisées selon la norme NF S 31-085, de caractérisation et mesurage du bruit dû au trafic routier, au passage d'un échantillon de véhicules représentatif du trafic d'une rocade périurbaine entre 6 heures et 22 heures. Les mesures sont exprimées en niveau sonore équivalent, LAeq, en dB(A) à 7,50 m de la voie. Les mesures ont été effectuées avec une couche de roulement en béton bitumineux drainant usé et avec une couche de roulement comprenant le béton bitumineux selon l'invention.
Les résultats obtenus sont les suivants

| | |
|---|---|
| Béton bitumineux drainant usé | LAeq : 84,4 dB(A) |
| Béton bitumineux selon l'invention | LAeq : 77,8 dB(A) |

Ces résultats correspondent à un gain acoustique de -6,6 dB(A).

Une estimation à partir des échantillons de véhicules utilisés permet de déduire que le revêtement selon l'invention entraîne une réduction relative de 78% de l'énergie sonore que l'on peut encore comparer à une division du trafic par 4,53 entre 6 heures et 22 heures.

### Exemple 3 : Essai de gain acoustique d'un revêtement comprenant le béton bitumineux de l'invention.

Des mesures de gain acoustique ont été effectuées pour un enrobé traditionnel de type BBSG et pour une couche de roulement comprenant le béton bitumineux selon l'invention. Ces mesures ont été effectuées dans des conditions identiques à celles décrites dans l'exemple 2 et selon la méthode « statistical pass-by » décrite dans la norme ISO 11819-1. La vitesse de référence des véhicules est de 50 km/h.
Les résultats obtenus sont les suivants

| | |
|---|---|
| Enrobé traditionnel BBSG | LAeq : 73,1 dB(A) |
| Béton bitumineux selon l'invention | LAeq : 67,9 dB(A) |

Ces résultats correspondent à un gain accoustique de -5,2 dB(A).

### Exemple 4 Mesures de gain acoustique réalisées « en champ proche » selon la méthode de l'INRETS.

Les mesures ont donné les résultats suivants :
Moyenne générale par tour de roue à 50 km/h, microphone à l'arrière de la roue :

| | |
|---|---|
| Enrobé BBSG | LAeq : 90,4 dB(A) |
| Béton bitumineux selon l'invention | LAeq : 85,7 dB(A) |

Ces résultats correspondent à un gain accoustique de -4,7 dB(A).

### Exemple 5 : Essai de gain acoustique d'un revêtement comprenant le béton bitumineux de l'invention.

Des mesures de gain acoustique ont été effectuées pour un enrobé de type BBTM 0/6 et pour une couche de roulement comprenant le béton bitumineux selon l'invention. Ces mesures ont été effectuées dans des conditions identiques à celles décrites dans l'exemple 4.

La vitesse de référence des véhicules est de 110 km/h. le gain acoustique par rapport à la référence est de -2,5 dB(A), le gain calculé conventionnellement à 80 km/h selon la norme ISO 11819-1 s'élève à -4 dB(A).

Les essais décrits dans les exemples 2 à 5 ci-dessus ont montré qu'une couche de roulement réalisée à partir de la composition de béton bitumineux selon l'invention permet d'abaisser significativement le BCPC comparativement au niveau mesuré sur un revêtement classique composé uniquement de granulats classiques. De plus, l'abaissement important du BCPC est durable et reproductible quels que soient les granulats classiques utilisés. Une couche de roulement selon l'invention présente également un niveau d'adhérence élevé et durable.

## Revendications

1. Béton bitumineux (1 ) pour couche de roulement comprenant des granulats classiques (20), éventuellement des fines d'apport (3), éventuellement un ou des additifs et un liant (4), **caractérisé en ce qu'**il comprend en outre 10% à 25% en masse de granulats alvéolaires (21) possédant une masse volumique en vrac inférieure à un gramme par centimètre cube.

2. Béton bitumineux (1) selon la revendication 1, **caractérisé en ce que** les granulats alvéolaires (21) sont choisis parmi les gammes de tailles 4/6,3 ; 4/10 ; 6,3/10 ; 3/5 ; 3/8 ; 5/8 ; 5/10 et 8/11.

3. Béton bitumineux (1) selon la revendication 1 ou 2, **caractérisé en ce que** les granulats classiques (20) ont une dimension maximale (D) d'au plus 6,3 mm.

4. Béton bitumineux (1) selon l'une des revendications 1 à 3, **caractérisé en ce que** les granulats alvéolaires (21) sont choisis parmi les pouzzolanes, l'argile expansée, le schiste expansé.

5. Béton bitumineux (1) selon l'une des revendications 1 à 4, **caractérisé en ce que** le liant (4) est un bitume pur.

6. Béton bitumineux (1) selon l'une des revendications 1 à 4, **caractérisé en ce que** le liant (4) est un bitume modifié.

7. Béton bitumineux (1) selon l'une des revendications 1 à 4, **caractérisé en ce que** le liant (4) comprend un mélange de bitumes routiers et d'un élastomère thermoplastique de type polystyrène-polybutadiène-polystyrène séquencé.

8. Béton bitumineux (1) selon l'une des revendications 1 à 7, **caractérisé en ce qu'**il comprend :
- 45% à 70% de granulats classiques (20) 4/6,3 ;
- 10 à 25% de granulats alvéolaires (21) ;
- 15 à 35 % de granulats classiques (20) 0/2 ;
- 0 à 5% de fines d'apport (3) ;
- 0 à 5% d'additif ; et
l'ensemble étant lié par un liant (4), à raison d'environ 6 parties en masse pour cent parties en masse de granulats classiques (20) et alvéolaires (21) et de fines d'apport (3).

9. Couche de roulement, **caractérisée en ce qu'**elle comprend un béton bitumineux (1) selon l'une des revendications 1 à 8.
